Europäisches Patentamt

(19) European Patent Office

Office européen des brevets

(11) Publication number: **0 009 961**
**A1**

(12) ## EUROPEAN PATENT APPLICATION

(21) Application number: **79302072.8**

(22) Date of filing: **01.10.79**

(51) Int. Cl.³: **F 16 D 65/32**

(30) Priority: **02.10.78 US 947584**

(43) Date of publication of application:
**16.04.80 Bulletin 80/8**

(84) Designated Contracting States:
**DE FR GB IT**

(71) Applicant: **THE ECHLIN MANUFACTURING COMPANY**
**175 North Branford Road**
**Branford, Connecticut 06405(US)**

(72) Inventor: **Klimek, Boleslaw M.**
**441 Washington Street**
**Des Plaines, Illinois 60018(US)**

(72) Inventor: **Carton, Michael L.**
**Route 2**
**Iola, Kansas 66749(US)**

(74) Representative: **Leale, Robin George et al,**
**FRANK B. DEHN & CO. Imperial House 15-19 Kingsway**
**London WC2B 6UZ(GB)**

(54) **Actuator for use in a braking system.**

(57) A spring brake actuator including a powerful compression spring (72) which acts through a spring retaining plate (74) and a piston (50) to urge an elongated shaft (45) to translate through a bushing (48) while substantially avoiding the application of lateral forces to such shaft.

EP 0 009 961 A1

./...

FIG. 1

## ACTUATOR FOR USE IN A BRAKING SYSTEM

This invention relates to improvements in pneumatic spring brake actuators. More specifically, it relates to improvements in spring brake actuators which provide improved performance and extended durability.

Spring brake actuators of various designs are widely used in the trucking/transport industry due to their many advantageous operational characteristics.

Examples of the actuators and apparatus known in the art to which this invention pertains are shown in the following United States patents: Patent No. 3,109,347 issued to E. J. Brodl et al. on November 5, 1963; Patent No. 3,117,496 issued to H. L. Dobrikin on January 14, 1964; Patent No. 3,131,609 issued to H. L. Dobrikin et al. on May 5, 1964; Patent No. 3,182,566 issued to A. A. Berg et al on May 11, 1965; Patent No. 3,182,849 issued to C. Horowitz et al. on May 11, 1965, Patent No. 3,302,530 issued to H.L. Dobrikin et al. on February 7, 1977; Patent No. 3,331,291 issued to D. J. Rumsey on July 18, 1967; Patent No. 3,502,003 issued to H. L. Dobrikin et al. on March 24, 1970; Patent No. 3,581,627 issued to S. Campanini on June 1, 1971; Patent No. 3,636,822 issued to C. Horowitz on January 25, 1972; and Patent No. 3,908,520 issued to J. W. Ma on September 30, 1975.

As is well known to those skilled in the art to which this invention pertains, spring brake actuators automatically apply the brakes of a transport vehicle upon a substantial interruption in supply pressure to the actuators. This application is accomplished through the aegis of a powerful spring.

More specifically, under normal operating conditions, the spring is compressed by a piston or other suitable means under the influence of supply pressure. Whenever the supply pressure is interrupted, however, the spring is allowed to expand thereby forcing the piston and connected piston shaft to translate in a direction to actuate the vehicle brakes. Under such condition, the shaft translates through an expensive airtight bushing mounted in a chamber bulkhead. However, as the spring expands, it may exert underirable transverse forces on the piston and shaft. As a result, the shaft, when moving through the bushing, may be forced out of coaxial alignment with the axis of the bushing causing wear and deterioration of the bushing.

Moreover, as the spring expands in the absence of supply pressure, it is desirable to equalize pressures on each side of the piston to ensure unhindered movement of the piston and full effect of the spring force. This equalization is most desirably accomplished without requiring the ingress of ambient air to the actuator, thereby avoiding possible contamination by dust and other foreign matter.

0009961

- 3 -

It is a general object of this invention to provide an improved brake actuator.

It is a more specific object of this invention to provide a brake actuator including apparatus for minimizing the wear on an airtight bushing through which the actuating shaft extends.

It is a more specific object of this invention to provide a brake actuator including improved apparatus for equalizing the pressure in the spring brake chamber of the actuator.

Viewed from one aspect the invention provides an actuator for use in a braking system, comprising: a housing (10) having a longitudinal axis and a transverse axis; a first piston means (50) mounted for reciprocal movement within said housing along said longitudinal axis, said first piston means forming a first chamber (70) on one side thereof and a second chamber (36) on the other side thereof within said housing; first spring means (72) mounted within said first chamber; first spring retaining means (74) mounted within said housing adjoining said first spring means for reciprocal movement therein along said longitudinal axis, said first spring retaining means including a surface disposed to engage said first piston means; and shaft means (44, 45) including a transverse rearward surface disposed for slidably engaging a forward transverse surface of said first piston means for transferring, substantially undiminished, only longitudinal translational forces to such braking means.

- 4 -

Viewed from another aspect the invention provides an actuator for use in a braking system, comprising: a housing (10); a first piston means (50) mounted for reciprocal movement within said housing, and defining a first chamber (70) on one side and a second chamber (36) on the opposite side thereof; spring means(72) mounted within said first chamber for urging said first piston means in a predetermined direction; shaft means (44, 45) mounted at least partially within said second chamber in abutting relation with said first piston means for translating forces from said spring means to braking means; and valve means (116) disposed between said first piston means and said shaft means for selectively communicating fluid from said second chamber to said first chamber.

Thus the brake actuator of the invention may include a non-integrated piston-shaft arrangement which allows a piston shaft to undergo transverse motion relative to a spring piston thereby to relieve noncoaxial forces exerted on the piston by a compression spring.

More specifically, in a preferred embodiment a piston is disposed to reciprocate within a spring chamber of an actuator housing and transfer coaxially directed forces from a powerful compression spring in such chamber to a piston shaft. The compression spring engages a spring retaining plate which then engages the piston and is effective to urge the piston to translate in a brake actuation direction. The shaft includes an abutting surface which slidably engages the piston surface and effectuates the transfer of force from the piston to the vehicle brakes. An equalization valve may be disposed to selectively permit fluid to flow from the one side of the piston to the other to reduce any vacuum effect created by the expansion of the compression spring.

In the accompanying drawings:-

FIGURE 1 shows a partial section of a spring brake actuator employing the principles of this invention;

FIGURE 2 shows a partial section of an alternative embodiment of a spring brake actuator employing the principles of this invention; and

FIGURE 2A shows an exploded view of a portion of an alternative embodiment of a spring brake actuator employing the principles of this invention as shown in Figure 2.

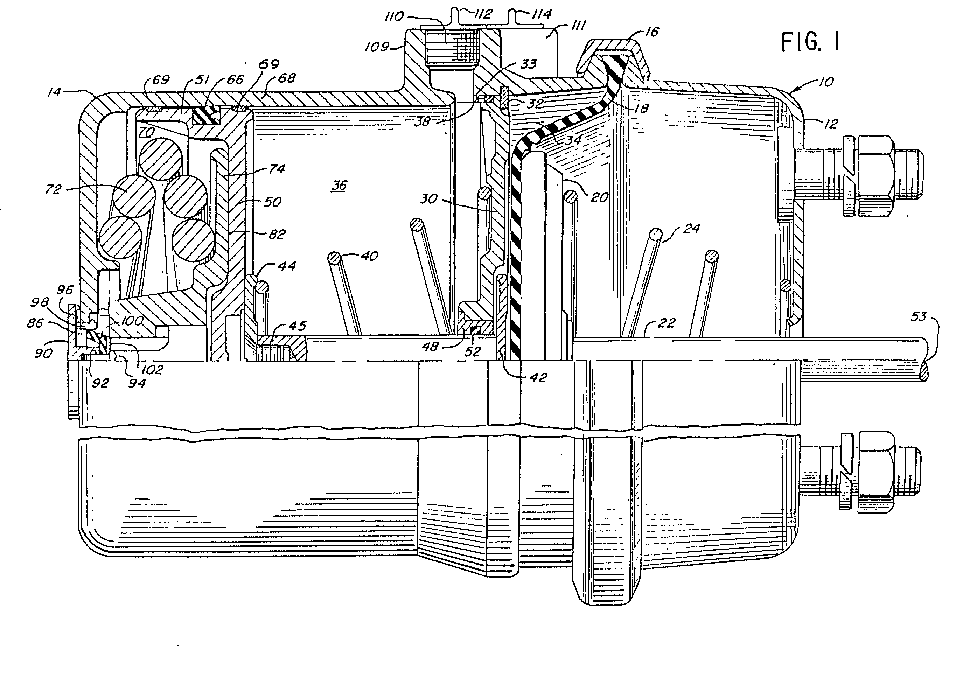

Referring to Figure 1, a spring brake actuator embodying principles of this invention is shown generally at 10 and includes a forward housing section 12 and a rearward housing section 14. The two housing sections are generally concave in shape and are connected together by clamp ring 16, with a diaphragm 18 interposed between the housing sections 12 and 14. A piston 20 mounted to a brake application shaft 22 is held in engagement with the forward surface of the diaphragm 18 by a compression spring 24 which engages a forward surface of the piston 20 and the rearward surface of the housing section 12.

A bulkhead 30, maintained in position by retaining ring 32 and annular protrusion 33, forms chambers 34 and 36 on opposite sides thereof. A seal 38 sealingly engages the bulkhead 30 and the housing section 14. The forward chamber 34 formed between the rearward surface of the diaphragm 18 and the forward surface of the bulkhead 30 is in communication with a service port 111 through a passage (not shown).

A shaft 45 is longitudinally disposed with the chamber 36 and reciprocates through a bushing 48 disposed in the bulk head 30. An annular seal 52 sealingly engages the shaft 45. A plate 42 is disposed at the forward end of the shaft 45 and engages the rearward surface of the diaphragm 18. A plate 44 is disposed at the rearward end of the shaft 45. A compression spring 40 is disposed in chamber 36 between the bulk head 30 and the plate 44.

A piston 50 is coaxially disposed within chamber 36 and is mounted for reciprocal movement in abutting relation to the plate 44. The piston 50 is provided with an annular extension 51 at its perimeter which cooperates with bearings 69 to provide for reciprocal, sliding engagment of the piston 50 with the housing section 14 while preventing rotation of the piston 50 about an axis therethrough which is normal to the axis 53. The piston 50 includes an annular seal 66 which slideably and sealingly engages the housing section 14.

The piston 50, together with the housing section 14, also forms a chamber 70 generally rearward of the piston 50. Within the chamber 70 is disposed the powerful spring 72 which engages the housing section 14 and a spring retaining plate 74. It should be noted that the piston 50 is formed with a rearward surface 82 for contacting the spring retaining plate 74. Whenever the pressure in the chamber 36 forces the piston rearwardly, the spring retaining plate 74 is also forced rearwardly and compresses the spring 72. When the pressure in chamber 36 is reduced, the spring 72 expands exerting forces on the retaining plate 74 and the piston 50. Some of those forces may be due to unequal force application on respective sides of plate 74. The discrete relation of the retaining plate 74, the piston 50, the retainer 44, and the sliding interengagement thereof is effective along with the extension 51 and the bearings 69 to substantially prevent the transmission to the shaft 45 of all but the force coaxial with axis 53. As a result of the construction, undesirable movements of the shaf 45 deleterious to the bushing 48 are minimized.

The housing section 14 includes an aperture 86 extending therethrough at the rearward portion thereof generally along the axis 53 which communicates with chamber 70. A valve 90 is positioned within the aperture 86 for selectively sealing the aperture 86 against the inflow of fluid from the exterior of the actuator 10 while allowing for exhaust of fluid within the chamber 70. The valve 90 is of a resilient material, i.e. plastic, which has embedded threads 92 for engagement by a screw 94. The valve 90 has at least one aperture 96 which allows fluid to pass therethrough from chamber 70 to atmosphere. In addition, the valve 90 has a perimetrical extension 98 which resiliently snap-locks into engagement with the outer wall of the housing section 14. A resilient "V" check valve 100 is held in engagement with the valve 90 by a washer 102 and the screw 94. The "V" check valve 100 readily permits fluid flow from the chamber 70 to atmosphere while allowing only a slow leakage in the opposite direction.

Disposed at the top of the housing 14, as shown in Figure 1, is emergency port 109 and service port 111. The emergency port 109 includes a passage 110 that is temporarily closed by a plug 112 during shipping. The passage 110 communicates with the chamber 36. Similarly, as already mentioned, the service port 111 includes a passage, not shown, which is closed by a plug 114. The passage, not shown, included in the port 111 communicates with the chamber 34.

In operation, in the absence of supply pressure in the chamber 36, the piston 50 (and shaft 45) is maintained in a forward position determined by the extension of the spring 72. When the piston 50 is in such forward position, the springs 40 and 24 are compressed. However, when the emergency or supply pressure is present at port 109 (the plug 112 having been removed), it is communicated via passage 110 to the chamber 36. The pressure forces the piston 50 to move rearwardly against the force of the spring 72. This rearward movement of the piston 50 against the plate 74 tends to cuase an increase in pressure in the chamber 70 due to the decrease in volume of such chamber. Excess pressure is vented, however, to atmosphere via the port 86 and the check valve 90. Thus, the chamber 70 is maintained at substantially ambient pressure.

With the piston 50 in its rearward position, as shown in Figure 1, operation of a treadle valve (not shown) causes service pressure to be communicated via port 111 to chamber 34. The presence of fluid in chamber 34 acts against the diaphragm 18 and causes the piston 20 to translate forward against the force of the spring 24. The forward movement of the piston 20 causes the shaft 22 to move forwardly thereby actuating the brakes (not shown) through braking means (not shown). When service pressure is vented, the return spring 24 urges the piston 20 and the diaphragm 18 to retract thereby releasing the brakes.

In the event that the emergency or supply pressure is lost, the pressure in chamber 36 diminishes and spring 72 urges retaining plate 74 and piston 50 forwardly thereby causing the shaft 45 to exert force on the plate 42 and thus on the diaphragm 18. As the diaphragm 18 is urged forwardly by the plate 42, it operates to push the piston 20 forwardly thereby causing the shaft 22 to translate to actuate the vehicle brakes.

As the spring 72 expands to cause the retaining plate 74 and the piston 50 to translate forwardly, a partial vacuum (pressure less than ambient) is created in the chamber 70. In the embodiment shown in Fig. 1 the partial vacuum created in the chamber 70 is released over a period of time by virtue of the slow leakage of ambient air into the chamber 70 through the plastic vlave 90 and the "V" check valve 100 into the passage 86.

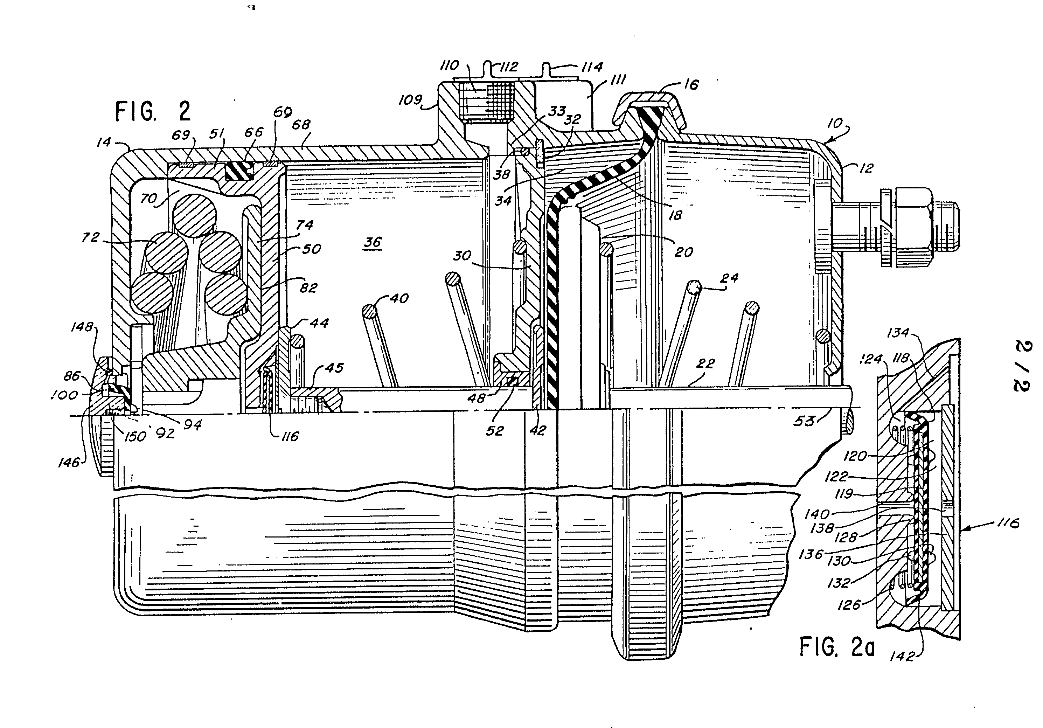

As shown in the embodiment of Fig. 2, however, an equalizing valve 116 may be provided in the piston 50 to more quickly bring about the equalization of the chamber 70 while avoiding the drawing into the chamber 70 of ambient air. As shown more clearly in Fig. 2a, the equalising valve 116 is disposed in a cavity 120 defined by an apertured plate 136 and a depression 137 in the piston 50. A flutter valve 118 is disposed in the cavity 120. The valve 118 includes a resilient matellic insert 119. The valve 118 has an annular lip 142 which engages the walls of the cavity 120. Disposed on a forward and rearward side of the valve 118 are protuberances 130 and 132. The valve 118 is adapted to seat on an annular valve seat 28 disposed on the forward surface of the depression 137. The valve 118 defines chambers 122 and 124 within the cavity 120. The chamber 122 is on the forward side of the valve 118, and the chamber 124 is on the rearward side of the valve 118. The chamber 122 communicated with the chamber 36 through an aperture 138 in the plate 136 and through the air space between the metallic plate 44 and the metallic piston 50 which, being other than rubber, are not in sealing engagement. Chamber 122 communicates with chamber 124 past the annular lip 142 of the valve 118. Chamber 124 communicates with the chamber 70 via a passage 140 and with the chamber 36 via a drill 134 and the above-mentioned air space between the rearward surface of the plate 44 and the forward surface of the piston 50. The drill 134 is of diameter relatively small compared to the passage 140. A return spring 126 is dis- disposed in the chamber 124 and urges the valve 118 forward within the chamber 120.

In operation, when the emergency or supply pressure is present in the chamber 36, it is communicated from chamber 36 to chamber 122 via the aperture 138. Pressure in chamber 122 operates to move the valve 118 against the force of the spring 126 and causes it to seat on the valve seat 128 closing the passage 140. The fluid in the chamber 122 flows into the chamber 124 past the annular lip 142 of the valve 118. In addition, fluid is also communicated from the chamber 36 to the chamber 124 by the drill 134. Thus, in the steady statem fluid has been communicated to the chamber 124 but has not been allowed to enter the passage 140. As a result, the pressure in chamber 124 eventually equals that in chamber 36.

When supply pressure reduces suddenly in the chamber 36, the pressure in the chamber 122 also reduces creating a pressure differential across the valve 118, and causing it to translate forwardly under the influence of the pressure in the chamber 124 and the force of the spring 126. When the valve 118 moves forwardly, it unseats from valve seat 128, thereby allowing the fluid in the chamber 124 to be communicated to the chamber 70 by the passage 140. In addition, the chamber 36 communicates with the chamber 70 via the drill 134, the chamber 124 and the passage 140. Thus, fluid enters the chamber 70 and relieves the vacuum therein which results from the contemporaneous movement of the piston 50 forwardly.

As the equalizing valve 116 eliminates the need for a leak through a check valve disposed in the passage 86, a valve 146 may be utilized which would allow only a one-way flow of fluid from the chamber 70 to atmosphere.

The generally circular valve 146 is provided with a protruded portion 150 which extends into the passage 86.

An annular seal 148 of diameter slightly less than the outer diameter of the valve 146 is provided to effectuate closure of the valve against fluid flow from the atmosphere into the chamber 70.

This alternative embodiment provides for faster actuation of the brake by minimizing the negative pressure effect of the vacuum created in the chamber O whenever the spring 72 is successively compressed and released. Further, the internal components of the apparatus are protected against the deleterious effects of impurities in atmospheric fluid by allowing only a one-way flow of fluid from the chamber 70 to atmosphere through the exhaust port 86.

While the present invention is described herein with reference to particular embodiments, it should be understood that the invention is not limited thereto. The pneumatic actuator of the present invention may be employed in a variety of forms and may be adapted to a variety of brake actuating requirements as those skilled in the art will recognize in light of the present invention.

Claims:-

1.  An actuator for use in a braking system, comprising:

a housing (10) having a longitudinal axis and a transverse axis;

a first piston means (50) mounted for reciprocal movement within said housing along said longitudinal axis, said first piston means forming a first chamber (70) on one side thereof and a second housing (36) on the other side thereof within said first housing;

first spring means (72) mounted within said first chamber;

first spring retaining means (74) mounted within said housing adjoining said first spring means for reciprocal movement therein along said first spring means for reciprocal movement therein along said longitudinal axis, said first spring retaining means including a surface disposed to engage said first piston means;

and shaft means (44, 45) including a transverse rearward surface disposed for slideably engaging a forward transverse surface of said first piston means for transferring, substantially undiminished, only longitudinal translational forces to such braking means.

2.  An actuator for use in a braking system, comprising:

a housing (10);

a first piston means (50) mounted for reciprocal movement within said housing, and defining a first chamber (70) on one side and a second chamber (36) on the opposite side thereof;

spring means (72) mounted within said first chamber for urging said first piston means in a predetermined direction;

shaft means (44, 45) mounted at least partially within said second chamber in abutting relation with said first piston means for translating forces from said spring means to braking means; and

valve means (116) disposed between said first piston means and said shaft means for selectively communicating fluid from said second chamber to said first chamber.

3. The actuator of claim 2 wherein said valve (116) includes:

an apertured plate (136) which defined a cavity within said first piston means (50);

a valve (118) mounted for reciprocal movement within said cavity and defining a third chamber (124) on one side and a fourth chamber (122) on the opposite side thereof;

a second spring means (126) disposed eithin said third chamber between said valve member and said cavity wall;

said cavity wall having first and secon passages formed therein, said first passage (134) effecting communication of fluid from said second chamber (36) to said third chamber (124) and second passage (140) effecting communication of fluid from said third chamber to said first chamber (70) whenever said valve member is in a forward position within said cavity.

4. The actuator of claim 2 or 3 wherein said first chamber (70) communicates with atmosphere through a second check valve means (146) which is effective to preclude communication of fluid from atmosphere to said first chamber.

5. The actuator of any of claims 1 to 4 wherein said first piston means (50) includes an annular perimetrical extension (51) parallel to its axis effective to maintain said first piston means in substantially coaxial alignment relative to said spring means (72) and said shaft means (44, 45).

6. The actuator of any of claims 1 to 5 wherein said shaft means includes an elongated shaft member (45) disposed longitudinally within said housing with a first annular plate (44) disposed concentrically and coaxially at one end thereof and a second annular plate (42) disposed concentrically and coaxially at the opposite end thereof.

7. The actuator of any of claims 1 to 6 wherein said housing includes a first section (14) and a second section (12), said first housing section having at least one aperture with a check valve (90; 146) disposed therein.

8. The actuator of claim 7 wherein said first housing section (14) is open-ended, said open end being partially closed by a retaining means (30).

9. The actuator of claim 8 wherein said retaining means (30) has bushing means (48) extending through the center thereof.

10. The actuator of claims 6 and 9 wherein said shaft member (45) extends through said bushing means.

11. The actuator of claim 4 wherein said second housing section (12) has an aperture and an open end.

12. The actuator of claims 8 to 11 wherein said open end is closed by a flexible sealing means (18) which cooperates with said retaining means (30) to define a third chamber (34) therebetween.

13. The actuator of claim 12 wherein said flexible sealing means (18) cooperates with said second housing section (12) to define a fourth chamber therein.

14. The actuator of claim 13 wherein said fourth chamber has a second piston means (20) disposed for reciprocal movement therein which is in concentric coaxial engagement with a second longitudinally disposed elongated shaft means (22) and biased by a second spring means (24).

15. The actuator of claim 14 wherein said second elongated shaft means (22) is adapted to engage said braking means.

16. The actuator of claims 6 to 14 wherein said second annular plate (42) and said second piston means (20) are biased by said first and second spring means (72,24) respectively so as to be in abutting relation through and with said flexible sealing means (18).

17. The actuator of any of claims 1 to 16 wherein said housing has a first port means (109) and a second port means (111).

18. The actuator of claim 17 wherein said first port means (109) communicates with said second chamber (36), whereby when fluid enters said second chamber via said first port means it forces said first piston means (50) to reciprocate against said first spring means (72).

19. The actuator of claim 18 wherein said second port means (111) communicates with said third chamber (34), whereby when fluid enters said third chamber via said port means, it forces said second piston means (20) to reciprocate against said second spring means (24).

20. The actuator of claim 8 wherein said first and second housing sections (14, 12) are maintained in longitudinal coaxial end-to-end relation by a third retaining means (16).

21. The actuator of claim 20 wherein said retaining means is a clamp ring (16).

FIG. 1

FIG. 2

FIG. 2a

## EUROPEAN SEARCH REPORT

European Patent
Office

| Category | DOCUMENTS CONSIDERED TO BE RELEVANT | | CLASSIFICATION OF THE APPLICATION (Int. Cl.3) |
|---|---|---|---|
| | Citation of document with indication, where appropriate, of relevant passages | Relevant to claim | |
| X | GB - A - 1 394 069 (CLAYTON DEWANDRE) <br> * complete document * | 1,2, 5,7, 9-21 | F 16 D 65/32 |
| X,D | US - A - 3 302 530 (DOBRIKIN et al.) <br> * complete document * <br> & DE - A - 1 505 574 | 1-4, 7, 11-21 | |
| X | DE - A - 2 308 838 (BENDIX) <br> * fig. 1 to 3 * <br> & GB - A - 1 369 181 | 1-3, 8-15, 17-21 | **TECHNICAL FIELDS SEARCHED (Int.Cl.3)** <br><br> F 16 D 65/00 |
| | DE - A - 2 164 864 (BERG) <br> * fig. 1, reference no. 31, 33, 35 * | 1,2, 6 | |
| | DE - B2 - 2 310 304 (GIRLING) <br> * fig. 6, reference no. 13, 32 * <br> & GB - A - 1 390 531 | 5 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 28-11-1979 | Examiner <br> LUDWIG | |

EPO Form 1503.1 06.78